# EUROPEAN PATENT SPECIFICATION

(11) **EP 4 469 890 B1**
(45) Date of publication and mention of the grant of the patent: **14.01.2026**
(21) Application number: 23702091.2
(22) Date of filing: 24.01.2023
(51) Int. Cl.: G06F 8/77, G06F 8/41, G06F 8/74, G06F 8/75

(54) **AN APPROACH FOR CLASSIFYING SOURCE CODE WITH A CODE QUALITY INDICATOR**
ANSATZ ZUR KLASSIFIZIERUNG VON QUELLCODES MIT EINEM CODEQUALITÄTSINDIKATOR
APPROCHE POUR CLASSIFIER UN CODE SOURCE À L'AIDE D'UN INDICATEUR DE QUALITÉ DE CODE

(30) Priority: 28.01.2022 SE 2250081
(43) Date of publication of application: 04.12.2024
(73) Proprietor: Codescene AB, 215 32 Malmö (SE)
(72) Inventor: TORNHILL, Adam, 212 32 Malmö (SE)
(74) Representative: Ström & Gulliksson AB
(86) International application number: PCT/EP2023/051675
(87) International publication number: WO 2023/144140

(56) References cited:
- CN-A- 110 580 218
- US-A1- 2011 231 828

## Description

### TECHNICAL FIELD

The present disclosure relates generally to the field of code management. More particularly, it relates to classification of code using a code quality indicator.

### BACKGROUND

In the context of software development and maintenance, efficiency is typically important to save time (elapsed time and/or accumulated developer time) and money. One aspect of efficiency relates to concentrating development/maintenance efforts to portions of the code where it is most needed.

However, such concentration requires that the portions of the code that are in most need of development/maintenance efforts are identified. To accurately and reliably perform such identification is generally cumbersome; particularly when the code base is relatively large and/or dynamically changing (e.g., due to continuous development/maintenance efforts).

Some approaches in relation to code analysis/evaluation are already existing. For example, EP3236351B1 describes a computer-implemented method for identifying low-quality code groups. However, the approach presented therein yields a relatively blunt definition of code quality. Consequently, using this approach, portions of code where development/maintenance efforts are most needed may be overlooked and/or portions of code where development/maintenance efforts are not most needed may be presented as having low quality. US 2011/0231828 A1 describes an approach for evaluating and enforcing software design quality, and CN 110580218 A describes a software code complexity detection method.

Therefore, there is a need for alternative approaches to code classification.

Particularly, there is a need for approaches to code classification that provide improved guidance regarding which portions of code are most relevant for development/maintenance efforts.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an apparatus is referred to herein, it is to be understood as a physical product. The physical product may comprise one or more parts, such as controlling circuitry in the form of one or more controllers, one or more processors, or the like.

It is an object of some embodiments to solve or mitigate, alleviate, or eliminate at least some of the above or other disadvantages.

A first aspect is a computer-implemented method for code classification according to claim 1.

The method comprises parsing source code stored on a code carrier to obtain a plurality of code structure characteristics of the source code, and evaluating the code structure characteristics on at least three code structure levels.

The evaluation on each code structure level comprises, for each of one or more level-specific conditions, determining whether the code structure characteristics violate the level-specific condition, and - when the level-specific condition is violated - representing the violation by a weighted value.

The method also comprises combining the weighted values for at least some of the violated level-specific conditions over the at least three code structure levels to generate one or more code quality indicator for the source code.

In some embodiments, the at least three code structure levels comprise one or more of: a global level, a module level, an inter-module level, a function level, an inter-function level, and an implementation level.

In some embodiments, at least some of the level-specific conditions includes a requirement for one or more of: cohesion, nesting depth, number of execution paths, lines of code, lines of declaration, number of functions, function size, number of built in types, number of string types, number of function arguments, code duplication, assertion duplication, consecutive assertions, and clusters of conditional nesting.

The weighted value is indicative of a significance of the violated level-specific condition and/or of an extent of the violation.

In some embodiments, combining weighted values comprises accumulating the weighted values and mapping the result of accumulation to a code quality indicator value.

In some embodiments, the one or more code quality indicator for the source code comprises module-specific code quality values and/or an overall code quality value of the source code.

In some embodiments, the method further comprises implementing - on the code carrier - an association between the one or more code quality indicator and the source code.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for code classification according to claim 8.

The apparatus comprises controlling circuitry configured to cause parsing source code stored on a code carrier to obtain a plurality of code structure characteristics of the source code, and evaluation of the code structure characteristics on at least three code structure levels.

The evaluation on each code structure level comprises, for each of one or more level-specific conditions, determination of whether the code structure characteristics violate the level-specific condition, and - responsive to the level-specific condition being violated - representation of the violation by a weighted value.

The controlling circuitry is also configured to cause combination of the weighted values for at least some of the violated level-specific conditions over the at least three code structure levels to generate one or more code quality indicator for the source code.

A fourth aspect is a system of one or more (e.g., a plurality of) servers, wherein the system is configured to carry out the method of the first aspect, and/or wherein at least one of the servers comprises the apparatus of the third aspect.

In some embodiments, any of the above aspects may additionally have features identical with or corresponding to any of the various features as explained above for any of the other aspects. An advantage of some embodiments is that alternative approaches to code classification are provided.

An advantage of some embodiments, is that an improved metric for code quality is provided. The metric is termed herein as "code quality indicator" (a.k.a., code health), but may - alternatively or additionally - be referred to as (and/or provide an example of) code quality metric, code complexity metric, unified metric for software complexity, software anti-patterns metric, code smell metric, and/or software maintainability metric.

An advantage of some embodiments is that the code classification using the code quality indicator enables benchmarking of different codebases; e.g., against each other. For example, managing a (typically relatively large) software development organization and/or a (typically relatively large) software architecture may include comparing the code quality indicators of two or more (e.g., all) codebases for the organization and/or architecture to determine which codebase should receive priority regarding improvement efforts.

An advantage of some embodiments, is that the metric for code quality is efficiently provided, even for relatively large code bases (e.g., due to parsing to obtain code structure characteristics relevant for determining the metric, and performing evaluation of the code structure characteristics rather than evaluation of the code as such).

An advantage of some embodiments, is that the metric for code quality can be dynamically updated (e.g., to provide feedback on performed development/maintenance efforts and/or keep guidance up to date regarding which portions of code are most relevant for development/maintenance efforts).

An advantage of some embodiments, is that the metric for code quality may be used to present - or otherwise convey - an internal state of the code base (wherein the code base, and thereby its internal state, may be dynamically changing; e.g., due to continuous development/maintenance efforts).

An advantage of some embodiments, is that improved guidance is provided regarding which portions of code are most relevant for development/maintenance efforts.

An advantage of some embodiments, is that more efficient software development and maintenance is enabled; thereby potentially saving time (elapsed time and/or accumulated developer time) and money.

An advantage of some embodiments, is that the code base is subjected to fewer checkouts and commits (e.g., because unnecessary development/maintenance efforts are avoided).

An advantage of some embodiments, is that the code base becomes more compact (e.g., because development/maintenance efforts are guided towards inefficient code portions), thereby taking up less storage space.

An advantage of some embodiments, is that execution and/or compilation of the code becomes faster (e.g., because development/maintenance efforts are guided towards inefficient code portions).

An advantage of some embodiments is that the metric for code quality may be presented to a user (e.g., a developer, or a developer organization) to guide the user to perform the technical task of improving the code base (e.g., making it more compact and/or less complex and/or more execution efficient). By presenting dynamically updated metrics, continued guidance may be provided in the form of human-machine interaction.

An advantage of some embodiments, is that determination of the metric for code quality is generally independent of the programming language of the code. In some embodiments, condition violation weighting values and/or map scaling values may be varying depending on the programming language, but the procedure for determination of the metric for code quality remains unchanged.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a schematic block diagram illustrating an example procedural structure according to some embodiments;
Figure 3 is a schematic block diagram illustrating an example apparatus according to some embodiments;
Figure 4 is a schematic drawing illustrating an example system according to some embodiments; and
Figure 5 is a schematic drawing illustrating an example computer readable medium according to some embodiments.

### DETAILED DESCRIPTION

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described that enable accurate and reliable identification of portions of a source code that are in most need of development/maintenance efforts (at least identification of portion of the source code that are among the portions in most need of development/maintenance efforts). Thereby, a user is guided to perform improvement on such portions.

Furthermore, by performing the identification dynamically, the user received feedback on the improvement efforts and is continuously guided towards portions of a source code that are currently in most need of development/maintenance efforts.

For example, in dynamic identification, an identification update may guide the user to continue improvement work on the previously identified portions (when the updated identification shows that the portions are still in need of improvement) or to seize improvement work on the previously identified portions (when the updated identification shows that the portions are no longer in need of improvement). Alternatively or additionally, an identification update may guide the user towards portions newly identified as being in need of improvement (e.g., added portions and/or portions affected - directly or indirectly - by recent development/maintenance efforts).

In some embodiments, an identification update may be performed by evaluating only added portions and/or recently adapted portions. Such approaches has the benefit of improved efficiency of the identification (e.g., in terms of required time and/or computation capacity).

Thus, alternative approaches to code classification are provided, in which portions of a source code that are in most need of development/maintenance efforts are identified via a metric for code quality termed "code quality indicator".

For example, a portion of code may be identified as being in need of development/maintenance efforts when the code quality indicator value determined for that portion falls in a range that indicates relatively low code quality (e.g., when the code quality indicator value is below a code quality threshold value).

Generally, a portion of code may be any suitable subset of the source code (e.g., a module, or a collection of modules). The term module may refer to any suitable code entity (e.g., a file of code, or a collection of files that together represent a source code component). A module may comprise one or more code parts referred to as functions, wherein each function constitutes a functional execution unit.

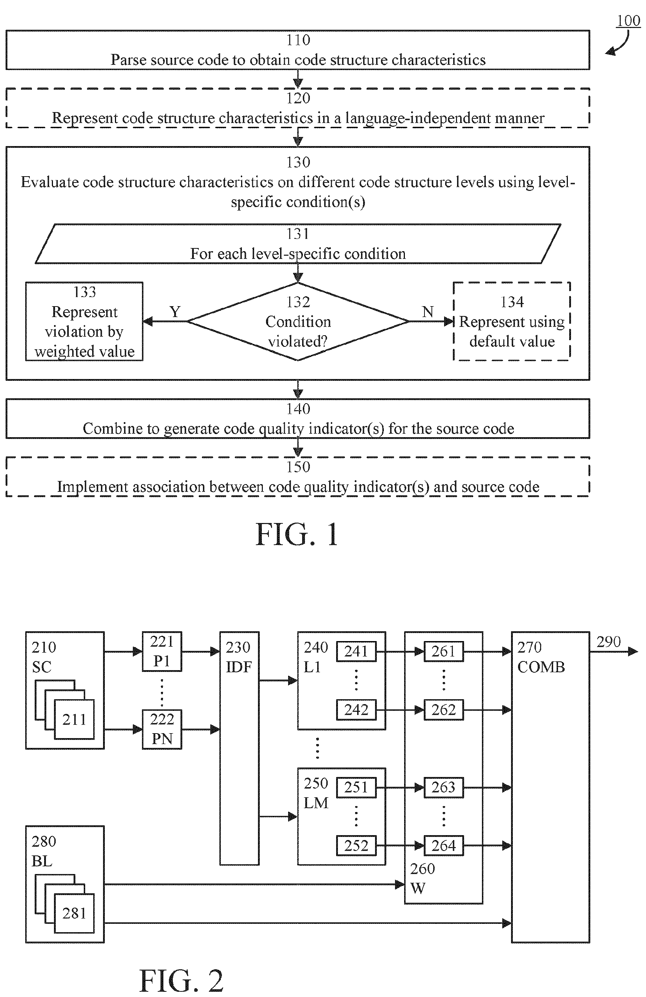

Figure 1 illustrates an example method 100 according to some embodiments. The method 100 is a computer-implemented method for code classification. In some embodiments, one or more (e.g., all) of the steps of the method 100 are performed automatically.

In step 110, source code stored on a code carrier (e.g., storing hardware) is parsed to obtain a plurality of code structure characteristics. In some scenarios (e.g., in an initial application of the method to a specific source code), the parsing may be for all modules of the source code. In some scenarios (e.g., in a subsequent application of the method to a specific source code), the parsing may be only for some of the modules of the source code (e.g., modules that have been changed and/or modules that have been added since a previous application of the method to the source code).

The code structure characteristics may comprise any suitable characteristics indicative of the structure of a code. For example, the code structure characteristics for a module may comprise one or more of: the data fields of the module and/or characteristics of the data fields of the module (number, size, type, etc.), the functions of the module and/or characteristics of the functions of the module (e.g., number, size, number of arguments, size of arguments, type of arguments, number of outputs, size of outputs, type of outputs, etc.), and characteristics of the control flow implemented (e.g., number of execution branches - such as implied by conditional statements and/or logical operators in the code, number and/or size of execution iterations - such as implied by loop statements in the code, types of conditional statements, etc.).

In some embodiments, step 110 also comprises identifying the programming language of the source code, and enabling corresponding weight values (to be used in some embodiments of later-described sub-step 133) and/or corresponding worst case normative values (to be used in some embodiments of later-described step 140).

In some embodiments, the method 100 may comprise representing the obtained code structure characteristics using a format that is independent of the programming language of the source code, as illustrated by optional step 120. A benefit of such an approach is that the method may be executed in the same manner regardless of which programming language is used for the source code. Thereby, the code classification is efficient and flexible.

For example, the method need not be redesigned when a new programming language is encountered, as long as there is a suitable parsing approach for that new language available. At most, encountering a new programming language may require designing a corresponding approach for representing code structure characteristics using the language-independent format, and/or providing corresponding weight values and/or worst case normative values.

The language-independent format may be seen as a way to describe the source code and/or the code structure characteristics in generalized terms.

In step 130, the code structure characteristics are evaluated on at least three (different) code structure levels.

One or more of the code structure levels applied in the evaluation of step 130 may, for example, be selected from the list of: a global level, a module level, an inter-module level, a function level, an inter-function level, and an implementation level.

Evaluation on the global level may refer to analysis of general code patterns perceivable throughout the source code (e.g., code characteristics that are not tied to a specific module, interactions between specific modules, a specific function, or interactions between specific functions). Examples include averages taken over the modules of the source code, and extremes (e.g., maximum/minimum) among the modules of the source code.

Evaluation on the module level may refer to analysis of code characteristics associated with a specific module.

Evaluation on the inter-module level may refer to analysis of code characteristics associated with interactions between specific modules.

Evaluation on the function level may refer to analysis of code characteristics associated with a specific function, and/or analysis of code characteristics associated with the function(s) of a specific module.

Evaluation on the inter-function level may refer to analysis of code characteristics associated with interactions between specific functions (within the same mode, or in different modules).

Evaluation on the implementation level may refer to analysis of code characteristics inside a specific function.

It should be noted that other code structure levels (e.g., a source code dependency level) may be used in various embodiments; alternatively or additionally to the code structure levels mentioned above.

In some embodiments, the code structure characteristics are evaluated on at least a module level, a function level, and an inter-function level. Alternatively or additionally, the code structure characteristics are evaluated on at least an implementation level, a module level, and a function level according to some embodiments. Yet alternatively or additionally, the code structure characteristics are evaluated on at least an implementation level, a module level, and an inter-module level according to some embodiments. Yet alternatively or additionally, the code structure characteristics are evaluated on at least an implementation level, a module level, and an inter-function level according to some embodiments. Yet alternatively or additionally, the code structure characteristics are evaluated on at least a module level, an inter-module level, and a function level according to some embodiments. Yet alternatively or additionally, the code structure characteristics are evaluated on at least a module level, an inter-module level, and an inter-function level according to some embodiments.

In some embodiments, step 130 comprises evaluating the code structure characteristics on at least four (different) code structure levels. For example, the code structure characteristics are evaluated on at least an implementation level, a module level, an inter-module level, and a function level according to some embodiments. Alternatively or additionally, the code structure characteristics are evaluated on at least an implementation level, a module level, a function level, and an inter-function level according to some embodiments. Yet alternatively or additionally, the code structure characteristics are evaluated on at least a module level, an inter-module level, a function level, and an inter-function level according to some embodiments.

In some embodiments, step 130 comprises evaluating the code structure characteristics on at least five (different) code structure levels. For example, the code structure characteristics are evaluated on at least an implementation level, a module level, an inter-module level, a function level, and an inter-function level according to some embodiments.

The evaluation of the code structure characteristics on at least three levels is beneficial because it improves the code quality information compared to evaluation on fewer levels (e.g., by making it more accurate and/or more diversified).

For example, evaluation on a global level only provides overall code quality information of the entire code base and fails to discriminate between code portions that have comparatively high code quality and code portions that have comparatively low code quality. Thus, guidance regarding where to concentrate improvement efforts is not achieved. On the other hand, evaluation on only modular and/or functional level only provides local code quality information and fails to recognize general code patterns that lowers the code quality and/or problematic interactions between modules and/or between functions.

The evaluation of step 130 is performed - on each code structure level -for each of one or more level-specific conditions, as illustrated by sub-step 131. For each level-specific condition, the evaluation comprises determining whether the code structure characteristics violate the level-specific condition, as illustrated by sub-step 132. When the level-specific condition is violated (Y-path out of sub-step 132) the evaluation comprises representing the violation by a weighted value, as illustrated by sub-step 133. When the level-specific condition is not violated (N-path out of sub-step 132) the evaluation typically comprises representing the outcome by a default value, as illustrated by sub-step 134.

The default value is typically different from any possible weighted value. For example, the weighted value may be a non-zero value (e.g., a positive value) and the default value may be a zero value. However, it should be noted that any suitable weighted and default values may be used.

The weighted value may be seen as a nominal value (e.g., one) multiplied by a scalar value (a weight), wherein the nominal value represents the detected violation and is typically equal for all violations, and the weight represents the impact the violation has on code quality.

In some embodiments, the weighted value may be limited to a range of possible weighted values (e.g., the weighted value may be required to be higher than zero and lower than a maximum weighted value).

In some embodiments, the weighted values (e.g., the weights) are specific to the programming language of the source code as implied earlier. A benefit of the weights being specific to the programming language of the source code, is that discrimination is possible for code behavior that is problematic for some programming languages, but less so for other programming languages; thereby enabling more accurate code quality indicator values.

Alternatively or additionally, the weighted values (e.g., the weights) may be determined from a baseline library of source code with known code quality.

The weighted value (e.g., the weight) is indicative of a significance of the violated level-specific condition (e.g., in relation to other level-specific conditions). Thus, each level-specific condition may be associated with a corresponding weight. Thereby, the impact that a violation has on the code quality indicator is set in relation to how crucial the corresponding condition is for code quality. Furthermore, the impact of a violation on the code quality indicator may be set differently for different programming languages.

Alternatively or additionally, the weighted value (e.g., the weight) is indicative of an extent of the violation. Thereby, the impact that a violation has on the code quality indicator is set in relation to how extensive the violation is. For example, if a level-specific condition is considered violated when a code structure characteristic falls on a specific side of a corresponding threshold value (e.g., when the number of lines of code of a function is larger than a number of lines threshold value), the weighted value for the violation may be larger the further away the code structure characteristic is from the corresponding threshold value (e.g., the more lines of code there are in excess of the number of lines threshold value).

In some embodiments, the weighted value may be seen as a nominal value (e.g., one) multiplied by a scalar value (a weight), which is in turn a product between a first weight indicative of a significance of the violated level-specific condition and a second weight be indicative of an extent of the violation.

In some embodiments, the weighted value may be seen as an intermediate weighted value indicative of an extent of the violation multiplied by a weight indicative of a significance of the violated level-specific condition.

In step 140, the weighted values for at least some (e.g., all, or a sub-set) of the violated level-specific conditions are combined over the at least three code structure levels to generate one or more code quality indicator for the source code. Typically, each code quality indicator is chosen from a range of possible code quality indicator values.

In typical embodiments, combining weighted values comprises accumulating (e.g., aggregating) the weighted values and mapping the result to a code quality indicator value (e.g., chosen from the range of possible code quality indicator values).

For example, one end of the range of possible code quality indicator values (e.g., a maximum value for the code quality indicator) may correspond to a scenario where no violations have been detected (e.g., such that when no weighted values are included in the accumulation - i.e., the resulting value is typically zero - a mapping to the code quality value at this end of the range is applied).

Alternatively or additionally, another end of the range of possible code quality indicator values (e.g., a minimum value for the code quality indicator) may correspond to a worst case violation scenario (e.g., such that an accumulation of weighted values that results in a worst case normative value maps to the code quality value at this end of the range). In some embodiments, the worst case violation scenario (and, consequently, the corresponding worst case normative value) is determined from a baseline library of source code with known code quality. Alternatively or additionally, the worst case normative value may be specific to the programming language of the source code as implied earlier.

When the accumulation of weighted values has a resulting value between zero and the worst case normative value, the resulting value may, for example, be mapped to the range of possible code quality indicator values using a linear/affine scale, or any other suitable (strictly) monotonous (e.g., decreasing) scale.

Alternatively or additionally, should the accumulation of weighted values have a resulting value above the worst case normative value, the resulting value may, for example, be mapped to the end of the range of possible code quality indicator values that corresponds to the worst case normative value.

For example, an accumulation of weighted values having a resulting value of zero may be mapped to a code quality indicator value (e.g., at one end of a range of possible code quality indicator values) corresponding to a scenario where no violations have been detected, an accumulation of weighted values having a resulting value equal to, or larger than, the worst case normative value may be mapped to a code quality indicator value (e.g., at another end of a range of possible code quality indicator values) corresponding to a worst case violation scenario, and an accumulation of weighted values having a resulting value between zero and the worst case normative value may be mapped to a code quality indicator between the code quality indicator values corresponding to the worst case violation scenario and the scenario where no violations have been detected.

In some embodiments, the code quality indicator is quantized. For example, the code quality indicator value may be an integer value, or a decimal value with a specified number of decimals, after quantization. Alternatively or additionally, quantization of the code quality indicator value may comprise representing the code quality indicator value by two or more code quality classes (e.g., a first class indicating "high quality"/"healthy" code and a second class indicating "low quality"/"unhealthy" code, and possibly a third - intermediate - class indicating "medium quality"/"potentially unhealthy" code; wherein the second class may generate an alert to the user and the third class may generate a warning to the user).

According to the invention, the one or more code quality indicator for the source code comprises module-specific code quality values and further comprises an overall code quality value of the source code.

For a module-specific code quality value, a typical approach applied in step 140 is to combine only weighted values that relate to the module under consideration. For example, a module-specific code quality value may be based on a combination of implementation level violations, module level violations for the module under consideration, inter-module level violations for module interactions involving the module under consideration, function level violations for functions in the module under consideration, and inter-function level violations for function interactions where at least one of the involved functions are comprised in the module under consideration.

For an overall code quality value of the source code, a typical approach applied in step 140 may be to combine all weighted values.

The mapping (e.g., the worst case normative value) may differ for different modules under consideration, and/or may be different for the overall code quality value than it is for module-specific code quality values. The worst case normative value may, for example, be higher for the overall code quality value than it is for module-specific code quality values.

In some embodiments, the overall code quality value of the source code is determined based on a combination (e.g., an average) of the module-specific code quality values.

The evaluation on different levels, the weighting before combining, and the selective combining provides synergy effects compared to isolated evaluations on different levels. For example, a code quality indicator for a specific module is improved in that it is enabled to take into account not only code quality characteristics of that module, but also overall code quality characteristics of the entire code base and/or code quality characteristics related to interactions of that module with other modules; adequately weighted.

The code quality indicator may be seen as an internal state of the code base (which is typically dynamically changing; e.g., due to continuous development/maintenance efforts).

The code quality indicator is efficiently provided, even for relatively large code bases. Efficiency may be achieved since (only) relevant code structure characteristics are obtained by parsing and evaluated. Alternatively or additionally, efficiency may be achieved since the execution is independent which programming language is used for the source code.

The code quality indicator(s) generated in step 140 may be put to use in various ways. For example, the method may further comprise implementing an association between the code quality indicator(s) and the source code (e.g., an association between a module-specific code quality indicator and the corresponding module), as illustrated by optional step 150.

The code quality indicator(s), and their association to corresponding portions of the code, provide guidance to a user regarding which portions of the source code to concentrate on for improvement efforts (e.g., to achieve improvement(s), such as, reduced complexity, and/or decreased execution time, and/or reduced number of operations during execution, and/or decreased compilation time, and/or reduced storage requirements for the source code, and/or reduced storage requirements for variable during execution, etc.). Typically, the portions of the source code to concentrate on for improvement efforts correspond to those having the most extreme code quality indicator values (i.e., closest to a worst case scenario).

In some embodiments, the association is implemented on the code carrier. For example, the association may be implemented on the code carrier by storing thereon a list of generated module-specific code quality indicators, wherein each item of the list is tagged with an identifier of the corresponding module (e.g., a pointer to the module). Alternatively or additionally, the association may be implemented on the code carrier by associating the modules with labels indicating their corresponding module-specific code quality indicators.

Alternatively or additionally, the association may be implemented by rendering on a user interface (e.g., a visual display). In some embodiments, the association may be implemented by rendering a representation of modules of the source code, wherein the representation of the modules is indicative of their corresponding module-specific code quality indicators.

For example, each module may be represented by a circle (or some other suitable geometric form), wherein a color (or some other suitable characteristic) of the circle represents the corresponding module-specific (quantized) code quality indicator; and - possibly - wherein a size of the circle represents the size of the module.

In the presented representation, the module-representing circles may also be grouped into clusters that illustrate which modules are associated with each other. Example measures of association include: storage relations between modules (modules being stored in the same folder may indicate tight association), architectural relations between modules (modules belonging to the same architectural sub-system may indicate tight association), interactions between modules during execution (high number of interaction may indicate tight association), code similarity between modules (high amount of similar/identical code may indicate tight association), similarity of task performed by modules (modules involved in highly similar tasks may be tightly associated), timing of check-out and/or check-in of modules (modules that are checked-out and/or checked-in simultaneously, or substantially simultaneously, may be tightly associated), and identity of user performing check-out and/or check-in of modules (modules that are checked-out and/or checked-in by the same user may be tightly associated).

Grouping into clusters of modules together with the association between code quality indicators and corresponding modules improves the user guidance regarding which portions of the source code to concentrate on for improvement efforts. For example, instead of merely considering the portions of the source code that have the most extreme code quality indicator values for improvement efforts, a user could concentrate improvement efforts specifically on clusters of modules where there are relatively many modules with extreme code quality indicator values.

It should be noted that grouping into clusters of modules may be applied for any type of association between code quality indicators and corresponding modules; thereby improving user guidance.

In some embodiments, the method 100 is performed (e.g., at an initial instance) for the entire source code.

Alternatively or additionally (e.g., at one or more subsequent instances), the method may be performed only for added and/or updated portions of the source code.

Yet alternatively or additionally, performance of the method 100 may be triggered by detection of code portion addition and/or by code portion updating (e.g., a check in).

Hence, the code quality indicator(s) may be dynamically updated by repeating (e.g., iteratively, or triggered by - for example - module additions and/or module check-ins) the method 100. To improve efficiency, the method may be repeated only for added/updated portions of the code.

By dynamically updating the code quality indicator(s), continued guidance is provided to the user regarding which portions of code are most relevant for development/maintenance efforts at a specific time instance. Furthermore, dynamically updating the code quality indicator(s) provides feedback to the user regarding whether or not performed development/maintenance efforts successfully improved the code portion. Thus, the user may be continuously guided by human-machine interaction to effectively perform code improvement (e.g., making the code more compact and/or less complex and/or more execution efficient).

The level-specific conditions applied in the evaluation of step 130, may comprise any suitable conditions relevant to code quality. For example, at least some of the level-specific conditions may include a requirement for one or more of: cohesion, interdependency, nesting depth, number of (logical) execution paths (a.k.a. cyclomatic complexity), lines of code, lines of declaration, number of functions, function size, number of built in types, number of string types, number of function arguments, code duplication, assertion duplication, consecutive assertions, and clusters of conditional nesting.

Typically, low cohesion (e.g., of a module) is associated with (e.g., leads to, or indicates) low code quality. Alternatively or additionally, code quality typically decreases when cohesion decreases. An example cohesion condition is that the cohesion should be higher than a cohesion threshold value. A cohesion condition may, for example, be applied on the module level. High cohesion means that the module has one (or only a few) logical responsibility/-ies. Cohesion may, for example, be calculated using the LCOM4 (lack of cohesion in methods) metric.

Typically, high interdependency (e.g., between modules) is associated with (e.g., leads to, or indicates) low code quality. Alternatively or additionally, code quality typically decreases when interdependency increases. An example interdependency condition is that the interdependency should be lower than an interdependency threshold value. An interdependency condition may, for example, be applied on the inter-module level. Interdependency may be, for example, measured in number of exchanges of data or other information, and/or using the law of Demeter.

Typically, a large nesting depth (e.g., of a module, and/or of a function) is associated with (e.g., leads to, or indicates) low code quality. Alternatively or additionally, code quality typically decreases when the nesting depth increases. An example nesting depth condition is that the nesting depth should be lower than a nesting depth threshold value. A nesting depth condition may, for example, be applied on the implementation level and/or on the module level. A nesting is a logical control structure such as an if statement, or a loop.

Typically, a high number of execution paths (e.g., of a function, of a module, and/or globally) is associated with (e.g., leads to, or indicates) low code quality. Alternatively or additionally, code quality typically decreases when the number of execution paths increases. An example number of execution paths condition is that the number of execution paths should be lower than a number of execution paths threshold value. A number of execution paths condition may, for example, be applied on the module level and/or on the function level.

Typically, a high number of lines of code (e.g., of a function, and/or of a module) is associated with (e.g., leads to, or indicates) low code quality. Alternatively or additionally, code quality typically decreases when the number of lines of codes increases. An example lines of code condition is that the lines of code should be lower than a lines of code threshold value. A lines of code condition may, for example, be applied on the module level and/or on the function level.

Typically, a high number of lines of declarations (e.g., of a function, and/or of a module) is associated with (e.g., leads to, or indicates) low code quality. Alternatively or additionally, code quality typically decreases when the number of lines of declarations increases. An example lines of declaration condition is that the lines of declaration should be lower than a lines of declaration threshold value. A lines of declaration condition may, for example, be applied on the module level.

Typically, a high number of functions (e.g., of a module, and/or globally) is associated with (e.g., leads to, or indicates) low code quality. Alternatively or additionally, code quality typically decreases when the number of functions increases. An example number of functions condition is that the number of functions should be lower than a number of functions threshold value. A number of functions condition may, for example, be applied on the module level.

Typically, a large function size (e.g., of a function, and/or of a module) is associated with (e.g., leads to, or indicates) low code quality. Alternatively or additionally, code quality typically decreases when the function size increases. An example function size condition is that the function size should be lower than a function size threshold value. A function size condition may, for example, be applied on the module level and/or on the function level.

Typically, a high number, or ratio, of built in types (e.g., of a module, and/or globally) is associated with (e.g., leads to, or indicates) low code quality. Alternatively or additionally, code quality typically decreases when the number/ratio of built in types increases. An example number of built in types condition is that the number (or ratio) of built in types should be lower than a number of built in types threshold value. A number of built in types condition may, for example, be applied on the module level. The ratio of primitive built in types (e.g., used in function arguments) may be termed primitive obsession.

Typically, a high number, or ratio, of string types (e.g., of a module, and/or globally) is associated with (e.g., leads to, or indicates) low code quality. Alternatively or additionally, code quality typically decreases when the number/ratio of string types increases. An example number of string types condition is that the number (or ratio) of string types should be lower than a number of string types threshold value. A number of string types condition may, for example, be applied on the module level.

Typically, a high number of function arguments (e.g., of a function, and/or of a module) is associated with (e.g., leads to, or indicates) low code quality. Alternatively or additionally, code quality typically decreases when the number of function arguments increases. An example number of function arguments condition is that the number of function arguments should be lower than a number of function arguments threshold value. A number of function arguments condition may, for example, be applied on the function level.

Typically, a high amount of code duplication (e.g., between functions of a module, and/or within a function) is associated with (e.g., leads to, or indicates) low code quality. Alternatively or additionally, code quality typically decreases when the amount of code duplication increases. An example code duplication condition is that the size of duplicated code and/or the number of duplicates should be lower than a code duplication threshold value. A code duplication condition may, for example, be applied on the implementation level and/or on the on the inter-function level. Code duplication amount may be, for example, measured in lines of code.

Typically, a high amount of assertion duplication (e.g., between functions of a module, and/or within a function) is associated with (e.g., leads to, or indicates) low code quality. Alternatively or additionally, code quality typically decreases when the amount of assertion duplication increases. An example assertion duplication condition is that the size of duplicated assertion and/or the number of duplicates should be lower than an assertion duplication threshold value. An assertion duplication condition may, for example, be applied on the implementation level and/or on the on the inter-function level. Assertion duplication amount may be, for example, measured in lines of assertions.

Typically, a high amount of consecutive assertions (e.g., of a function) is associated with (e.g., leads to, or indicates) low code quality. Alternatively or additionally, code quality typically decreases when the amount of consecutive assertions increases. An example consecutive assertions condition is that the number of consecutive assertions should be lower than a consecutive assertions threshold value. A consecutive assertions condition may, for example, be applied on the implementation level.

Typically, for clusters of conditional nesting (e.g., of a function, of a module, and/or globally), a large nesting depth and/or a large amount of clusters is associated with (e.g., leads to, or indicates) low code quality. Alternatively or additionally, code quality typically decreases when the cluster nesting depth and/or the number of clusters increases. An example clusters of conditional nesting condition is that the number of clusters of conditional nesting and/or the depth of clustered conditional nesting should be lower than a clusters of conditional nesting threshold value. A clusters of conditional nesting condition may, for example, be applied on the implementation level. When there are multiple clusters of conditional nesting (e.g., multiple chunks of complex, nested logic in a same function), the situation may be termed as a "bumpy road".

In some embodiments, other/additional level-specific conditions may applied, which combines two or more of the above (or other) conditions. Examples include so-called brain conditions. A brain condition may, for example, be applied on the module level and/or on the function level.

An example brain condition for the function level is violated (and the function may be labeled as a "brain method") when two or more (e.g., all) of the following conditions are violated: the lines of code should be lower than a lines of code threshold value, the number of function arguments should be lower than a number of function arguments threshold value, the nesting depth should be lower than a nesting depth threshold value, and the number of execution paths should be lower than a number of execution paths threshold value. A brain method may be seen as a (typically large and complex) function that centralizes the behavior of the module in which it is comprised. The more complex the brain method, the lower the code health.

An example brain condition for the module level is violated (and the module may be labeled as a "brain class", "God class", or "blob") when two or more (e.g., all) of the following conditions are violated: the lines of code should be lower than a lines of code threshold value, the number of functions should be lower than a number of functions threshold value, and there should be no brain method in the module. A brain class may be seen as a module that does too many things and has too many logical responsibilities.

In a typical example, one or more of the following conditions are applied for the module level:
- The cohesion should be high (e.g., higher than a threshold value) to not cause a violation.
- The module should not be a brain class to not cause a violation.
- The overall nesting depth of the module should not be deep (e.g., not deeper than a threshold value) to not cause a violation. The overall nesting depth may be defined as the maximum nesting depth in overall scope of the module; i.e. for code outside functions.
- The overall code complexity should be low (e.g., lower than a threshold value) to not cause a violation. The overall code complexity may be defined as the average code complexity of the functions in the module. The code complexity of a function may be defined as the number of execution paths through the function (i.e., the cyclomatic complexity of the function)
- The overall number of execution paths through the module (i.e., the overall cyclomatic complexity of the module) should be low (e.g., lower than a threshold value) to not cause a violation.
- The number of lines of code in the module should be low (e.g., lower than a threshold value) to not cause a violation.
- The number of lines of declarations in the module should be low (e.g., lower than a threshold value) to not cause a violation.
- The number of functions in the module should be low (e.g., lower than a threshold value) to not cause a violation.
- The overall (e.g., aggregated) function size (e.g., measured in number of lines) should be low (e.g., lower than a threshold value) to not cause a violation.
- The ratio of primitive built in types used in function arguments of the functions in the module should be low (e.g., lower than a threshold value) to not cause a violation. A violation may be termed as primitive obsession.
- The ratio of string types used in function arguments of the functions in the module should be low (e.g., lower than a threshold value) to not cause a violation. A violation may be termed as string heavy function arguments.
- The average number of function arguments in the module should be low (e.g., lower than a threshold value) to not cause a violation. A violation may be termed as missing arguments abstraction.
- The maximum number of function arguments in any function of the module should be low (e.g., lower than a threshold value) to not cause a violation. A violation may be termed as excess number of function arguments.

In a same or different typical example, one or more of the following conditions are applied for the inter-module level:
- The amount of duplicated (or at least highly similar) code between functions (e.g., across the functions of two or more modules) should be low (e.g., lower than a threshold value) to not cause a violation.
- The dependency between different modules should be low (e.g., lower than a threshold value) to not cause a violation.
- The law of Demeter should be followed to not cause a violation.

In a same or different typical example, one or more of the following conditions are applied for the function level:
- The function should not be a brain method to not cause a violation.
- The number of execution paths through the function (i.e., the cyclomatic complexity of the function) should be low (e.g., lower than a threshold value) to not cause a violation.
- The number of lines of code in the function should be low (e.g., lower than a threshold value) to not cause a violation.
- The number of function arguments in the function should be low (e.g., lower than a threshold value) to not cause a violation.
- The maximum number of arguments to each class' constructor in the function should be low (e.g., lower than a threshold value) to not cause a violation. A violation may be termed as constructor over-injection.
- The nesting depth of the function should not be deep (e.g., not deeper than a threshold value) to not cause a violation.

In a same or different typical example, one or more of the following conditions are applied for the inter-function level:
- The amount of duplicated (or at least highly similar) code between functions (e.g., across the functions of a module) should be low (e.g., lower than a threshold value) to not cause a violation.
- The amount of duplicated assertion statements between functions (e.g., across the functions of a module) should be low (e.g., lower than a threshold value) to not cause a violation.

In a same or different typical example, one or more of the following conditions are applied for implementation level:
- The number of clusters of conditional nesting and/or the depth of clustered conditional nesting should be low (e.g., lower than a threshold value) to not cause a violation. A violation may be termed as a bumpy road.
- The maximum nesting depth for any function should not be deep (e.g., not deeper than a threshold value) to not cause a violation.
- The number of consecutive assertions (or assert statements) should be low (e.g., lower than a threshold value) to not cause a violation.

In a particular example, the module level evaluation comprises at least a cohesion condition and a brain class condition, the function level evaluation comprises at least a cyclomatic complexity condition and a brain method condition, the inter-function level evaluation comprises at least a code duplication condition, and the implementation level evaluation comprises at least a clusters of conditional nesting condition and a maximum nesting depth condition.

As mentioned earlier, the weighted values (e.g., the weights) of sub-step 133 and/or the worst case violation scenario (and, consequently, the corresponding worst case normative value) of step 140 may be determined based on a baseline library of source code with known code quality (i.e., with known code quality indicators).

For example, the source code instances of the baseline library may be samples of open source code.

The known code quality indicators of the baseline library may be determined by human evaluation, and/or based on user feedback, and/or by computer-implemented evaluation. For example, a user may be presented with a current code quality indicator value, and provide feedback regarding how well the current code quality indicator value matches their subjective impression of the code (e.g., an up-vote if the current code quality indicator value is similar to the subjective impression, and/or down-vote if the current code quality indicator value is not similar to the subjective impression). Such feedback may be used to recalibrate weights and/or worst case normative values. In some embodiments, the current code quality indicator value may be initially set to a default value, and may be iteratively improved based on user feedback.

Alternatively or additionally, the baseline library may be dynamically updated (e.g., by adding more source code instances and/or by changing the known code quality). For example, a source code instance evaluated by the method 100 may be added to the baseline library, as suitable.

Knowing the code quality indicators, the weights and/or the worst case normative values can be derived from the baseline library according to any suitable method. For example, the weights and/or the worst case normative values may be set such that the known code quality indicator values are achieved for the baseline library. For example, a machine learning algorithm may be trained based on the baseline library and the known code quality indicators to provide the weights and/or the worst case normative values.

The baseline library may comprise one or more (typically a plurality of) source code instances for each of one or more programming languages.

It should be noted that the weighted values (e.g., the weights) of sub-step 133 and/or the worst case violation scenario (and, consequently, the corresponding worst case normative value) of step 140 may be determined without using a baseline library, according to some embodiments. For example, each of the weighted values (e.g., the weights) and/or the worst case violation scenario (and, consequently, the corresponding worst case normative value) may be set to some suitable default value.

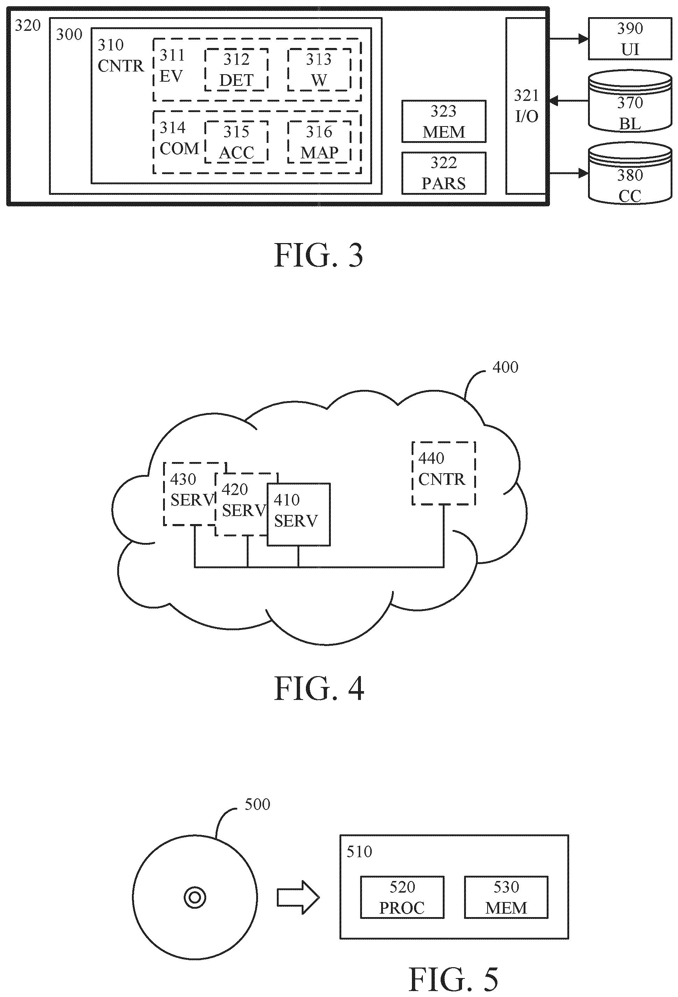

Figure 2 schematically illustrates an example procedural structure according to some embodiments. For example, the procedural structure of Figure 2 may be used to determine the execution flow for performance of the method 100 of Figure 1. Alternatively or additionally, the procedural structure of Figure 2 may be used to determine the (software and/or hardware) architecture of the apparatus 300 of Figure 3.

Figure 2 shows a source code (SC) 210 comprising a plurality of modules 211. The source code 210 is subjected to a plurality of parses (P1,...,PN) 221, 222 to obtain a plurality of code structure characteristics of the source code (compare with step 110 of Figure 1).

The obtained code structure characteristics may be represented using a format that is independent of the programming language of the source code (compare with step 120 of Figure 1); illustrated in Figure 2 by an internal data format (IDF) 230.

The code structure characteristics are evaluated on at least three code structure levels (compare with step 130 of Figure 1).

Evaluation on each code structure level is represented in Figure 2 by a plurality of code structure levels (L1,...,LM) 240, 250, and comprises determining, for each of one or more level-specific conditions 241, 242, 251, 252, whether the code structure characteristics violate level-specific condition (compare with sub-step 132 of Figure 1).

When a level-specific condition 241, 242, 251, 252 is violated, the violation is represented by a weighted value (compare with sub-step 133 of Figure 1). Application of weights 261, 262, 263, 264 to generate the weighted value for each violation is illustrated in Figure 2 in the form of a weighting block (W) 260. In some embodiments, the weights are controlled based on a baseline library (BL) 280 comprising a plurality of source code instances 281 with known code quality.

As illustrated by a combining block (COMB) 270 in Figure 2, at least some of the weighted values are combined over the code structure levels (compare with step 140 of Figure 1) to generate one or more code quality indicator 290 for the source code 210. In some embodiments, the combining is controlled based on the baseline library (BL) 280.

The code quality indicator 290 is used to provide guidance to a user regarding which portions should be prioritized for improvement efforts (compare with step 150 of Figure 1).

It should be noted that features and/or advantages described in connection with the method 100 of Figure 1 may be equally applicable to the procedural structure of Figure 2, even if not explicitly mentioned in connection thereto.

Figure 3 schematically illustrates an example apparatus 300 according to some embodiments. The apparatus 300 may be comprisable (e.g., comprised) in a device 320. For example, the device 320 may be server and/or a computing device. Alternatively or additionally, the apparatus 300 may be configured to perform (or cause performance of) the method 100 as described in connection with Figure 1.

The apparatus 300 is configured for code classification. To this end the apparatus 300 comprises a controller (CNTR; e.g., controlling circuitry or a control module - not to be mistaken for a module of the source code) 310.

The controller 310 is configured to cause parsing of source code stored on a code carrier (CC; e.g., storing circuitry or a storage module - not to be mistaken for a module of the source code) 380 to obtain a plurality of code structure characteristics of the source code (compare with step 110 of Figure 1).

To this end, the controller 310 may comprise, or be otherwise associated with (e.g., connected, or connectable, to) a parser (PARS; e.g., parsing circuitry or a parse module - not to be mistaken for a module of the source code) 322; illustrated in Figure 3 as comprised in the device 320. The parser 322 may be configured to parse - via an interface (I/O) 321 - the source code stored on the code carrier 380 to obtain the plurality of code structure characteristics of the source code.

The obtained code structure characteristics may be temporarily stored in a memory (MEM) 323 of the device 320; e.g., represented using a format that is independent of the programming language of the source code (compare with step 120 of Figure 1).

The controller 310 is also configured to cause evaluation of the code structure characteristics on at least three code structure levels (compare with step 130 of Figure 1), wherein the evaluation on each code structure level comprises - for each of one or more level-specific conditions - determination of whether the code structure characteristics violate the level-specific condition (compare with sub-step 132 of Figure 1) and - responsive to the level-specific condition being violated - representation of the violation by a weighted value (compare with sub-step 133 of Figure 1).

To this end, the controller 310 may comprise, or be otherwise associated with (e.g., connected, or connectable, to) one or more of: an evaluator (EV; e.g., evaluating circuitry or an evaluation module - not to be mistaken for a module of the source code) 311, a determiner (DET; e.g., determining circuitry or a determination module - not to be mistaken for a module of the source code) 312, and a weighter (W; e.g., weighting circuitry or a weight module - not to be mistaken for a module of the source code) 313. In some embodiments, the evaluator 311 may comprise the determiner 312 and the weighter 313, as illustrated in Figure 3. The evaluator 311 may be configured to evaluate the code structure characteristics on at least three code structure levels, the determiner 312 may be configured to determine whether the code structure characteristics violate a level-specific condition, and the weighter 313 may be configured to represent a violation by a weighted value.

The controller 310 is also configured to cause combination of the weighted values for at least some of the violated level-specific conditions over the at least three code structure levels to generate one or more code quality indicator for the source code (compare with step 140 of Figure 1).

To this end, the controller 310 may comprise, or be otherwise associated with (e.g., connected, or connectable, to) a combiner (COM; e.g., combining circuitry or a combination module - not to be mistaken for a module of the source code) 314. The combiner 314 may be configured to combine the weighted values for at least some of the violated level-specific conditions over the at least three code structure levels to generate one or more code quality indicator for the source code.

In some embodiments, the controller 310 is configured to cause the combination of weighted values to generate the code quality indicator by causing accumulation of the weighted values and mapping of the result to a code quality indicator value.

To this end, the controller 310 may comprise, or be otherwise associated with (e.g., connected, or connectable, to) one or more of: an accumulator (ACC; e.g., accumulating circuitry or an accumulation module - not to be mistaken for a module of the source code) 315, and a mapper (MAP; e.g., mapping circuitry or a map module - not to be mistaken for a module of the source code) 316. In some embodiments, the combiner 314 may comprise the accumulator 315 and the mapper 316, as illustrated in Figure 3. The accumulator 315 may be configured to accumulate the weighted values and the mapper 316 may be configured to map the result of accumulation to a code quality indicator value.

As already explained, the code quality indicator(s) are suitable for guiding a user regarding which portions of the source code to concentrate on for improvement efforts.

In some embodiments, the controller 310 is configured to cause an association between the code quality indicator(s) and the source code (compare with step 150 of Figure 1). Such an association may take any suitable form. For example, the code quality indicator(s) may be stored - e.g., through access via an interface (I/O) 321 - on the code carrier in association with the source code as exemplified in connection with Figure 1. Alternatively or additionally, the association between the code quality indicator(s) and the source code may be presented (e.g., visually) via a user interface (UI) 390 - e.g., accessed via an interface (I/O) 321.

As mentioned earlier, the weighted values (e.g., the weights) and/or the worst case violation scenario (and, consequently, the corresponding worst case normative value) may be determined based on a baseline library (BL) 370 - e.g., accessible via an interface (I/O) 321. The controller 310 may be configured to cause loading (e.g., into a memory 323) of weights and/or worst case normative value(s) from the baseline library, before - or during - the evaluation of the code structure characteristics.

Figure 4 schematically illustrates an example system 400 according to some embodiments. The system 400 comprises one or more (e.g., a plurality of) servers (410, 420, 430). The system 400 may, for example, be a cloud computing system.

In some embodiments, the system 400 is configured to carry out the method 100 of Figure 1 (e.g., by distributed execution, involving two or more of the servers 410, 420, 430).

Alternatively or additionally, the system 400 may comprise the a controller 440 configured to cause execution of the method 100 of Figure 1 and/or corresponding to the controller 310 of Figure 3. For example, the controller 440 may be comprised in one of the servers 410, 420, 430.

It should be noted that features and/or advantages described in connection with the method 100 of Figure 1 and/or the procedural structure of Figure 2 may be equally applicable to the apparatus 300 of Figure 3 and/or the system of Figure 4, even if not explicitly mentioned in connection thereto.

Some embodiments may be realized in software, or hardware, or a combination thereof. Alternatively or additionally, some embodiments may be performed by general purpose circuitry and/or by specialized circuitry. Such circuitry may, for example, be associated with or comprised in an apparatus such as a computing device, or a server node for distributed execution (e.g., cloud processing).

Embodiments may appear within an electronic apparatus (such as a computing device or server node) comprising circuitry and/or logic according to what has been described herein. Alternatively or additionally, an electronic apparatus (such as a computing device or server node) may be configured to perform methods according to any of the embodiments described herein. According to some embodiments, a computer program product comprises a non-transitory computer readable medium such as, for example, a universal serial bus (USB) memory, a plug-in card, an embedded drive, or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC; e.g., a data processing unit) 520, which may, for example, be comprised in a computing device or server node 510. When loaded into the data processor, the computer program may be stored in a memory (MEM) 530 associated with, or comprised in, the data processor 520. According to some embodiments, the computer program may, when loaded into, and run by, the data processor, cause execution of method steps according to, for example, the method illustrated in Figure 1, and/or method steps otherwise described herein.

Generally, all terms used herein are to be interpreted according to their ordinary meaning in the relevant technical field, unless a different meaning is clearly given and/or is implied from the context in which it is used.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

It should be understood that the details of the described embodiments are merely examples brought forward for illustrative purposes, and that all variations that fall within the scope of the claims are intended to be embraced therein.

## Claims

1. A computer-implemented method for code classification, the method comprising:
parsing (110) source code stored on a code carrier to obtain a plurality of code structure characteristics of the source code;
evaluating (130) the code structure characteristics on at least three code structure levels comprising a module level, wherein the evaluation on each code structure level comprises,
for each of one or more level-specific conditions:
determining (132) whether the code structure characteristics violate the level-specific condition, wherein the level-specific condition is considered violated when the code structure characteristic falls on a specific side of a corresponding threshold value; and
when the level-specific condition is violated, representing (133) the violation by a weighted value, wherein the weighted value is indicative of a significance of the violated level-specific condition and/or of an extent of the violation;
combining (140) the weighted values for at least some of the violated level-specific conditions over the at least three code structure levels to generate one or more code quality indicators for the source code, wherein the one or more code quality indicators for the source code comprise module-specific code quality values, and wherein generation of a module-specific code quality value comprises combining only weighted values that relate to the module under consideration; and
causing use of the one or more code quality indicators to provide guidance to a user regarding which portions of the source code should be prioritized for improvement efforts.

2. The method of claim 1, wherein the at least three code structure levels further comprise one or more of: a global level, an inter-module level, a function level, and an inter-function level, and an implementation level, wherein evaluation on the implementation level refers to analysis of code characteristics inside a function.

3. The method of any of claims 1 through 2, wherein at least some of the level-specific conditions includes a requirement for one or more of: cohesion, nesting depth, number of execution paths, lines of code, lines of declaration, number of functions, function size, number of built in types, number of string types, number of function arguments, code duplication, assertion duplication, consecutive assertions, and clusters of conditional nesting.

4. The method of any of claims 1 through 3, wherein combining weighted values comprises accumulating the weighted values and mapping the result of accumulation to a code quality indicator value.

5. The method of any of claims 1 through 4, wherein the one or more code quality indicators for the source code further comprises an overall code quality value of the source code.

6. The method of any of claims 1 through 5 further comprising implementing (150) - on the code carrier - an association between the one or more code quality indicators and the source code.

7. A computer program product comprising a non-transitory computer readable medium (500), having thereon a computer program comprising program instructions, the computer program being loadable into a data processing unit and configured to cause execution of the method according to any of claims 1 through 6 when the computer program is run by the data processing unit.

8. An apparatus for code classification, the apparatus comprising controlling circuitry (310) configured to cause:
parsing source code stored on a code carrier (380) to obtain a plurality of code structure characteristics of the source code;
evaluation of the code structure characteristics on at least three code structure levels comprising a module level, wherein the evaluation on each code structure level comprises, for each of one or more level-specific conditions:
determination of whether the code structure characteristics violate the level-specific condition, wherein the level-specific condition is considered violated when the code structure characteristic falls on a specific side of a corresponding threshold value; and
responsive to the level-specific condition being violated, representation of the violation by a weighted value, wherein the weighted value is indicative of a significance of the violated level-specific condition and/or of an extent of the violation;
combination of the weighted values for at least some of the violated level-specific conditions over the at least three code structure levels to generate one or more code quality indicators for the source code, wherein the one or more code quality indicators for the source code comprise module-specific code quality values, and wherein generation of a module-specific code quality value comprises combination of only weighted values that relate to the module under consideration; and
use of the one or more code quality indicators to provide guidance to a user regarding which portions of the source code should be prioritized for improvement efforts.

9. A system of one or more servers (410, 420, 430), wherein the system is configured to carry out the method of any of claims 1 through 6, and/or wherein at least one of the servers comprises the apparatus of claim 8.

## Patentansprüche

1. Computerimplementiertes Verfahren zur Codeklassifizierung, wobei das Verfahren Folgendes umfasst:
Parsen (110) von auf einem Codeträger gespeichertem Quellcode, um eine Vielzahl von Codestrukturmerkmalen des Quellcodes zu erhalten;
Evaluieren (130) der Codestrukturmerkmale auf mindestens drei Codestrukturebenen, die eine Modulebene umfassen, wobei das Evaluieren auf jeder Codestrukturebene für jede von einer oder mehreren ebenenspezifischen Bedingungen Folgendes umfasst:
Bestimmen (132), ob die Codestrukturmerkmale die ebenenspezifische Bedingung verletzen, wobei die ebenenspezifische Bedingung als verletzt gilt, wenn das Codestrukturmerkmal auf einer bestimmten Seite eines entsprechenden Schwellenwerts liegt; und
wenn die ebenenspezifische Bedingung verletzt wird, Darstellen (133) der Verletzung durch einen gewichteten Wert, wobei der gewichtete Wert eine Signifikanz der verletzten ebenenspezifischen Bedingung und/oder ein Ausmaß der Verletzung angibt;
Kombinieren (140) der gewichteten Werte für mindestens einige der verletzten ebenenspezifischen Bedingungen über die mindestens drei Codestrukturebenen, um einen oder mehrere Codequalitätsindikatoren für den Quellcode zu generieren, wobei der eine oder die mehreren Codequalitätsindikatoren für den Quellcode modulspezifische Codequalitätswerte umfassen und wobei ein Generieren eines modulspezifischen Codequalitätswerts ein Kombinieren nur von gewichteten Werten umfasst, die das betrachtete Modul betreffen; und
Bewirken einer Verwendung des einen oder der mehreren Codequalitätsindikatoren, um einem Benutzer Hinweise darauf zu geben, welche Teile des Quellcodes für Verbesserungsmaßnahmen priorisiert werden sollten.

2. Verfahren nach Anspruch 1, wobei die mindestens drei Codestrukturebenen ferner eine oder mehrere der folgenden Ebenen umfassen: eine globale Ebene, eine Inter-Modulebene, eine Funktionsebene und eine Inter-Funktionsebene und eine Implementierungsebene, wobei ein Evaluieren auf der Implementierungsebene eine Analyse von Codeeigenschaften innerhalb einer Funktion betrifft.

3. Verfahren nach einem der Ansprüche 1 bis 2, wobei mindestens einige der ebenenspezifischen Bedingungen eine Anforderung für eines oder mehrere der Folgenden umfassen: Kohäsion, Verschachtelungstiefe, Anzahl der Ausführungspfade, Codezeilen, Deklarationszeilen, Anzahl der Funktionen, Funktionsgröße, Anzahl der eingebauten Typen, Anzahl der Zeichenkettentypen, Anzahl der Funktionsargumente, Code-Duplizierung, Assertions-Duplizierung, aufeinanderfolgende Assertions und Cluster bedingter Verschachtelung.

4. Verfahren nach einem der Ansprüche 1 bis 3, wobei das Kombinieren gewichteter Werte ein Aufsummieren der gewichteten Werte und ein Zuordnen des Ergebnisses der Aufsummierung zu einem Codequalitätsindikatorwert umfasst.

5. Verfahren nach einem der Ansprüche 1 bis 4, wobei der oder die Codequalitätsindikatoren für den Quellcode ferner einen Gesamtcodequalitätswert des Quellcodes umfassen.

6. Verfahren nach einem der Ansprüche 1 bis 5, ferner umfassend ein Implementieren (150) - auf dem Codeträger - einer Verknüpfung zwischen dem einen oder den mehreren Codequalitätsindikatoren und dem Quellcode.

7. Computerprogrammprodukt, umfassend ein nichtflüchtiges computerlesbares Medium (500), auf dem sich ein Computerprogramm mit Programmanweisungen befindet, wobei das Computerprogramm in eine Datenverarbeitungseinheit ladbar ist und ausgebildet ist, die Ausführung des Verfahrens nach einem der Ansprüche 1 bis 6 zu bewirken, wenn das Computerprogramm von der Datenverarbeitungseinheit ausgeführt wird.

8. Vorrichtung zur Codeklassifizierung, wobei die Vorrichtung eine Steuerschaltung (310) umfasst, die ausgebildet ist, Folgendes zu bewirken:
Parsen von auf einem Codeträger (380) gespeichertem Quellcode, um eine Vielzahl von Codestrukturmerkmalen des Quellcodes zu erhalten;
Evaluieren der Codestrukturmerkmale auf mindestens drei Codestrukturebenen, die eine Modulebene umfassen, wobei das Evaluieren auf jeder Codestrukturebene für jede von einer oder mehreren ebenenspezifischen Bedingungen Folgendes umfasst:
Bestimmen, ob die Codestrukturmerkmale die ebenenspezifische Bedingung verletzen, wobei die ebenenspezifische Bedingung als verletzt gilt, wenn das Codestrukturmerkmal auf einer bestimmten Seite eines entsprechenden Schwellenwerts liegt; und
ansprechend darauf, dass die ebenenspezifische Bedingung verletzt ist, Darstellen der Verletzung durch einen gewichteten Wert, wobei der gewichtete Wert eine Signifikanz der verletzten ebenenspezifischen Bedingung und/oder ein Ausmaß der Verletzung angibt;
Kombinieren der gewichteten Werte für mindestens einige der verletzten ebenenspezifischen Bedingungen über die mindestens drei Codestrukturebenen, um einen oder mehrere Codequalitätsindikatoren für den Quellcode zu generieren, wobei der eine oder die mehreren Codequalitätsindikatoren für den Quellcode modulspezifische Codequalitätswerte umfassen und wobei eine Generierung eines modulspezifischen Codequalitätswerts eine Kombination nur von gewichteten Werten umfasst, die das betrachtete Modul betreffen; und Verwendung des einen oder der mehreren Codequalitätsindikatoren, um einem Benutzer Hinweise darauf zu geben, welche Teile des Quellcodes für Verbesserungsmaßnahmen priorisiert werden sollten.

9. System aus einem oder mehreren Servern (410, 420, 430), wobei das System ausgebildet ist, das Verfahren nach einem der Ansprüche 1 bis 6 durchzuführen, und/oder wobei mindestens einer der Server die Vorrichtung nach Anspruch 8 umfasst.

## Revendications

1. Procédé mis en œuvre par ordinateur pour une classification de code, le procédé comprenant :
l'analyse (110) d'un code source stocké sur un support de code pour obtenir une pluralité de caractéristiques de structure de code du code source ;
l'évaluation (130) des caractéristiques de structure de code sur au moins trois niveaux de structure de code comprenant un niveau module, dans lequel l'évaluation sur chaque niveau de structure de code comprend, pour chacune d'une ou plusieurs conditions spécifiques au niveau :
le fait de déterminer (132) si les caractéristiques de structure de code transgressent la condition spécifique au niveau, dans lequel la condition spécifique au niveau est considérée comme transgressée lorsque la caractéristique de structure de code tombe sur un côté spécifique d'une valeur seuil correspondante ; et
lorsque la condition spécifique au niveau est transgressée, la représentation (133) de la transgression par une valeur pondérée, dans lequel la valeur pondérée est indicative d'une importance de la condition spécifique au niveau transgressée et/ou d'une étendue de la transgression ;
la combinaison (140) des valeurs pondérées pour au moins certaines des conditions spécifiques au niveau transgressées sur les au moins trois niveaux de structure de code pour générer un ou plusieurs indicateurs de qualité de code pour le code source, dans lequel les un ou plusieurs indicateurs de qualité de code pour le code source comprennent des valeurs de qualité de code spécifiques au module, et dans lequel la génération d'une valeur de qualité de code spécifique au module comprend la seule combinaison de valeurs pondérées qui se rapportent au module considéré ; et
le fait de provoquer l'utilisation des un ou plusieurs indicateurs de qualité de code pour fournir des conseils à un utilisateur concernant les parties du code source qui devraient être priorisées pour réaliser des efforts d'amélioration.

2. Procédé selon la revendication 1, dans lequel les au moins trois niveaux de structure de code comprennent en outre un ou plusieurs parmi : un niveau global, un niveau inter-module, un niveau fonction, un niveau inter-fonction et un niveau de mise en œuvre, dans lequel l'évaluation sur le niveau de mise en œuvre fait référence à une étude de caractéristiques de code dans une fonction.

3. Procédé selon l'une quelconque des revendications 1 ou 2, dans lequel au moins certaines des conditions spécifiques au niveau comprennent une exigence portant sur un ou plusieurs parmi : la cohésion, la profondeur d'emboîtement, le nombre de chemins d'exécution, les lignes de code, les lignes de déclaration, le nombre de fonctions, la taille de fonction, le nombre de types prédéfinis, le nombre de types chaînes, le nombre d'arguments de fonction, la duplication de code, la duplication d'assertions, les assertions consécutives et les groupes d'emboîtement conditionnel.

4. Procédé selon l'une quelconque des revendications 1 à 3, dans lequel la combinaison de valeurs pondérées comprend l'accumulation des valeurs pondérées et la mise en correspondance du résultat de l'accumulation avec une valeur d'indicateur de qualité de code.

5. Procédé selon l'une quelconque des revendications 1 à 4, dans lequel les un ou plusieurs indicateurs de qualité de code pour le code source comprennent en outre une valeur globale de qualité de code source du code source.

6. Procédé selon l'une quelconque des revendications 1 à 5 comprenant en outre la mise en œuvre (150) - sur le support de code - d'une association entre les uns ou plusieurs indicateurs de qualité de code et le code source.

7. Produit programme d'ordinateur comprenant un support non transitoire lisible par ordinateur (500), ayant sur celui-ci un programme d'ordinateur comprenant des instructions de programme, le programme d'ordinateur étant chargeable dans une unité de traitement de données et configuré pour provoquer l'exécution du procédé selon l'une quelconque des revendications 1 à 6 lorsque le programme d'ordinateur tourne sur l'unité de traitement de données.

8. Appareil pour une classification de code, l'appareil comprenant une circuiterie de commande (310) configurée pour provoquer :
l'analyse d'un code source stocké sur un support de code (380) pour obtenir une pluralité de caractéristiques de structure de code du code source ;
l'évaluation des caractéristiques de structure de code sur au moins trois niveaux de structure de code comprenant un niveau module, dans lequel l'évaluation sur chaque niveau de structure de code comprend, pour chacune d'une ou de plusieurs conditions spécifiques au niveau :
le fait de déterminer si les caractéristiques de structure de code transgressent la condition spécifique au niveau, dans lequel la condition spécifique au niveau est considérée comme transgressée lorsque la caractéristique de structure de code tombe sur un côté spécifique d'une valeur seuil correspondante ; et
en réponse à la transgression de la condition spécifique au niveau, la représentation de la transgression par une valeur pondérée, dans lequel la valeur pondérée est indicative d'une importance de la condition spécifique au niveau transgressée et/ou d'une étendue de la transgression ;
la combinaison des valeurs pondérées pour au moins certaines des conditions spécifiques au niveau transgressées sur les au moins trois niveaux de structure de code pour générer un ou plusieurs indicateurs de qualité de code pour le code source, dans lequel les un ou plusieurs indicateurs de qualité de code pour le code source comprennent des valeurs de qualité de code spécifiques au module, et dans lequel la génération d'une valeur de qualité de code spécifique au module comprend la seule combinaison de valeurs pondérées qui se rapportent au module considéré ; et
l'utilisation des un ou plusieurs indicateurs de qualité de code pour fournir des conseils à un utilisateur concernant les parties du code source qui devraient être priorisées pour réaliser des efforts d'amélioration.

9. Système d'un ou plusieurs serveurs (410, 420, 430), dans lequel le système est configuré pour effectuer le procédé selon l'une quelconque des revendications 1 à 6, et/ou dans lequel au moins un des serveurs comprend l'appareil selon la revendication 8.
